# EUROPÄISCHE PATENTSCHRIFT

(11) **EP 2 867 621 B1**
(45) Veröffentlichungstag und Bekanntmachung des Hinweises auf die Patenterteilung: **10.08.2016**
(21) Anmeldenummer: 13728428.7
(22) Anmeldetag: 14.06.2013
(51) Int. Cl.: G01D 5/14, G01B 7/30

(54) **MAGNETFELDERZEUGER UND SENSORVORRICHTUNG FÜR DEN EINSATZ BEIM ERMITTELN EINES ROTATIONSWINKELS**
MAGNETIC FIELD GENERATOR AND SENSOR DEVICE FOR USE IN DETERMINING AN ANGLE OF ROTATION
GÉNÉRATEUR DE CHAMP MAGNÉTIQUE ET DISPOSITIF DÉTECTEUR SERVANT À DÉTERMINER UN ANGLE DE ROTATION

(30) Priorität: 29.06.2012 DE 102012211383
(43) Veröffentlichungstag der Anmeldung: 06.05.2015
(73) Patentinhaber: Continental Automotive GmbH, 30165 Hannover (DE)
(72) Erfinder: EL ALAMI, Abdullah, 65835 Liederbach (DE)
(86) Internationale Anmeldenummer: PCT/EP2013/062428
(87) Internationale Veröffentlichungsnummer: WO 2014/001106

(56) Entgegenhaltungen:
- WO-A1-2004/063672
- WO-A2-01/46651
- US-A1- 2002 078 937
- US-B1- 6 304 078

## Beschreibung

Die Erfindung betrifft einen Magnetfelderzeuger und eine Sensorvorrichtung für den Einsatz beim Ermitteln eines Rotationswinkels mittels einer Sensoreinheit, die dazu ausgebildet ist, die magnetische Flussdichte zu erfassen.

Rotationswinkel können mittels unterschiedlicher Sensoren ermittelt werden. So kann beispielsweise ein den Hall-Effekt nutzender Sensor eingesetzt sein mit einem Hall-Element. Hierbei wird das Hall-Element beispielsweise exzentrisch über einer Rotationsachse eines Permanentmagneten platziert, um die der Rotationswinkel gebildet wird. In diesem Zusammenhang wird beispielsweise die zur Rotationsachse parallele Flussdichtekomponente des vom Permanentmagneten erzeugten magnetischen Feldes ausgewertet. Das Messprinzip beruht darauf, dass die Flussdichtekomponente bei einer kompletten Rotation einen sinusartigen Signalverlauf aufweist.

Die WO 2004/063672 A1 offenbart eine Anordnung zur Positionsbestimmung einer magnetfeldsensitiven Sensoreinheit in einem magnetischen Feld einer Magnetanordnung.

Die US 2002/0078937 A1 offenbart eine Vorrichtung zur Detektion einer Rotationsrichtung einer Brennkraftmaschine mittels eines Magnetrades, das an einer elektrischen Zündspule vorbeiläuft.

Die US 6,304,078 B1 offenbart einen kontaktfreien Linearpositionssensor, der angeschrägte bipolare Magnete aufweist.

Die WO 01/46651 A2 offenbart einen Sensor zur Versatzmessung, der eine Magnetanordnung umfasst, die ein Gehäuse aufweist um an eines von zwei relativ zueinander bewegbaren Elementen befestigt zu werden.

Die Aufgabe, die der Erfindung zugrunde liegt, ist es, eine Sensorvorrichtung zu schaffen für den Einsatz beim Ermitteln eines Rotationswinkels, die dazu beiträgt, dass der Rotationswinkel präzise ermittelt werden kann.

Die Aufgabe wird gelöst durch die Merkmale des unabhängigen Patentanspruchs. Vorteilhafte Ausgestaltungen sind in den Unteransprüchen gekennzeichnet.

Die Erfindung zeichnet sich aus durch eine Sensorvorrichtung, die mindestens einen Magnetfelderzeuger für den Einsatz beim Ermitteln eines Rotationswinkels mittels mindestens einer Sensoreinheit aufweist und die mindestens eine Sensoreinheit, die dazu ausgebildet ist, die magnetische Flussdichte zu erfassen, die repräsentativ ist für den Rotationswinkel. Der Magnetfelderzeuger ist als Dipolmagnet mit einem Nord- und einem Südpol ausgebildet. Er weist eine Magnetebene auf, die in Abwesenheit anderer magnetfeldformender Körper rechtwinklig von allen Magnetfeldlinien durchflossen wird. Außerdem weist er eine Stirngerade auf, die stirnseitig auf der Oberfläche des Magnetfelderzeugers und auf der Magnetebene liegt. Außerdem weist er eine Orthogonalebene auf, die orthogonal zur Pol-trennebene ist und in der die Stirngerade liegt. Der Magnetfelderzeuger weist eine Stirnfläche auf, die eine Nordpolstirnfläche und eine Südpolstirnfläche aufweist. Die Stirnfläche ist an mindestens einer Stelle in orthogonaler Richtung zur Orthogonalebene erhaben in Bezug auf die Orthogonalebene. Außerdem weist der Magnetfelderzeuger eine Projektionsgerade auf, die einen erhabenen Punkt der Stirnfläche auf die Orthogonalebene projiziert, wobei mindestens ein Teil der Projektionsgerade zwischen dem erhabenen Punkt der Stirnfläche und seiner Projektion auf der Orthogonalebene innerhalb des Magnetfelderzeugers liegt. Beispielsweise ist der erhabene Punkt der erhabenste Punkt der Stirnfläche. Die Sensoreinheit ist parallel zur Orthogonalebene der Stirnseite des Magnetfelderzeugers zugewandt positioniert und relativ zum Magnetfelderzeuger bewegbar angeordnet.

Auf diese Weise kann das vom Magnetfelderzeuger erzeugte Magnetfeld so an die Sensoreinheit angepasst werden, dass es möglich ist, präzise einen Winkel zu ermitteln und außerdem kleinere Magnetfelderzeuger zu realisieren, wodurch Platz gespart wird. Außerdem können billigere Magnetwerkstoffe verwendet werden, wie zum Beispiel Hartferrite an Stelle von Magneten auf Seltenerdbasis. Zusätzlich kann auch der Abstand zwischen Sensoreinheit und Magnetfelderzeuger erhöht werden und die Desachsierungstoleranz wird durch die spezielle Form des Magnetfelderzeugers erhöht.

Insbesondere je Südpol- und Nordpolstirnfläche weist der Magnetfelderzeuger mindestens einen erhabensten Punkt auf, bei dem mindestens ein Teil der jeweiligen Projektionsgeraden zwischen dem jeweiligen erhabensten Punkt und seiner Projektion auf der Orthogonalebene innerhalb des Magnetfelderzeugers liegt.

Die Magnetebene kann im Folgenden auch als Poltrennebene bezeichnet werden.

Gemäß einer vorteilhaften Ausgestaltung weist der Magnetfelderzeuger bezogen auf die Orthogonalebene eine runde Grundfläche auf. So kann die Fläche bestmöglich genutzt werden, falls der Magnetfelderzeuger auf einer runden Welle platziert wird.

Gemäß einer weiteren vorteilhaften Ausgestaltung weist die Nordpolstirnfläche und die Südpolstirnfläche des Magnetfelderzeugers zumindest in einem Teilbereich eine plane Fläche auf. Dies erleichtert den Herstellungsprozess, womit Kosten gespart werden können.

Gemäß einer weiteren vorteilhaften Ausgestaltung weist die Nordpolstirnfläche und die Südpolstirnfläche des Magnetfelderzeugers zumindest in einem Teilbereich eine konvexe Fläche auf.

Gemäß einer weiteren vorteilhaften Ausgestaltung weist die Nordpolstirnfläche und die Südpolstirnfläche des Magnetfelderzeugers zumindest in einem Teilbereich eine konkave Fläche auf.

Gemäß einer weiteren vorteilhaften Ausgestaltung umfasst der Magnetfelderzeuger einen Hartferritmagneten. Durch einen Hartferritwerkstoff, wie zum Beispiel eine Mischung aus Eisenoxid (Fe₂O₃) und Bariumoxid (BaO), kann der Magnet zu einem günstigen Preis hergestellt werden.

Gemäß einer weiteren vorteilhaften Ausgestaltung umfasst der Magnetfelderzeuger einen kunststoffgebundenen Magnetwerkstoff. Durch Verbindung des Magnetpulvers mit Polymerwerkstoffen, wie zum Beispiel verschiede Polyamide (PA6/PA12) oder Polyphenylensulfid (PPS), können flexiblere Magnete hergestellt werden.

Gemäß einer weiteren vorteilhaften Ausgestaltung weist der Magnetfelderzeuger einen Spaltwinkel auf, der von zwei Geraden aufgespannt wird. Die zwei Geraden liegen in einer zur Poltrennebene und zur Orthogonalebene orthogonalen Ebene. Sie schneiden die Stirngerade, wobei eine der Geraden durch den erhabensten Punkt der Südpolstirnfläche und die andere Gerade durch den erhabensten Punkt der Nordpolstirnfläche geht. Der Spaltwinkel liegt in einem Winkelbereich zwischen 30° und 170°. In dem Winkelbereich kann eine besonders günstige Ausgestaltung des Magnetfeldes des Magnetfelderzeugers erreicht werden.

Ausführungsbeispiele der Erfindung sind im Folgenden anhand der schematischen Zeichnungen näher erläutert. Es zeigen:
- Figur 1: ein erstes Ausführungsbeispiel einer Sensorvorrichtung, die einen Magnetfelderzeuger und eine Sensoreinheit aufweist,
- Figur 2: eine seitliche Ansicht des Magnetfelderzeugers gemäß dem ersten Ausführungsbeispiel,
- Figur 3: ein zweites Ausführungsbeispiel des Magnetfelderzeugers mit konvexen Polstirnflächen,
- Figur 4: ein drittes Ausführungsbeispiel des Magnetfelderzeugers mit konkaven Polstirnflächen,
- Figur 5: ein viertes Ausführungsbeispiel des Magnetfelderzeugers mit einer rechteckigen Grundfläche,
- Figur 6: ein fünftes Ausführungsbeispiel des Magnetfelderzeugers mit teilweise planen Poloberfläche,
- Figur 7: eine seitliche Sicht von magnetischen Feldlinien des Magnetfelderzeugers gemäß dem ersten Ausführungsbeispiel,
- Figur 8: eine stirnseitige Ansicht des Magnetfelderzeugers gemäß dem ersten Ausführungsbeispiel,
- Figur 9: einen magnetischen Flussdichteverlauf und
- Figur 10: einen magnetischen Flussdichteverlauf bezogen auf das erste Ausführungsbeispiel,
- Figur 11: Ein sechstes Ausführungsbeispiel des Magnetfelderzeugers.

Elemente gleicher Konstruktion oder Funktion sind figurenübergreifend mit den gleichen Bezugszeichen gekennzeichnet.

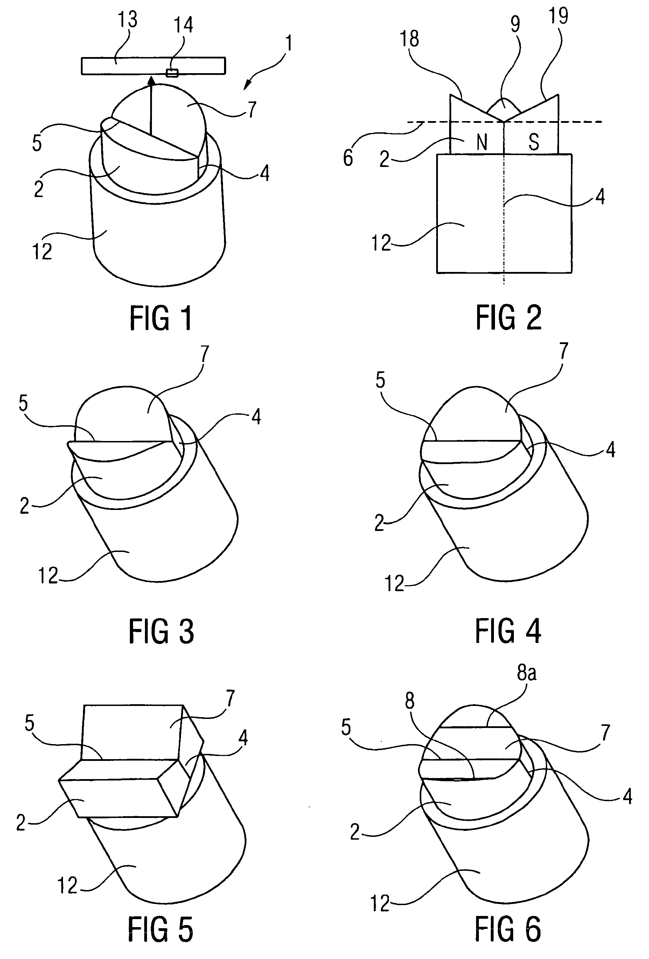

Eine Sensorvorrichtung 1 (Figur 1) weist einen Magnetfelderzeuger 2 und eine Sensoreinheit 13 auf. Die Sensoreinheit 13 weist mindestens ein Sensorelement 14 auf. Das Sensorelement 14 ist dazu ausgebildet, ein Messsignal zu erzeugen, das repräsentativ ist für eine Flussdichtekomponente des magnetischen Feldes, das der Magnetfelderzeuger 2 erzeugt. Die Sensoreinheit 13 weist zum Beispiel zwei bis acht Sensorelemente 14 auf. Sie sind jeweils paarweise konzentrisch um den Mittelpunkt der Sensoreinheit angeordnet. Hierdurch lassen sich Konzentritätsabweichungen von Magnetfelderzeuger- und Sensoreinheitsmittelpunkt besonders einfach ausgleichen. Die Sensoreinheit 13 ist achsparallel zu dem Magnetfelderzeuger 2 angeordnet. Der Magnetfelderzeuger 2 sitzt typischerweise auf einer Welle 12. Der Magnetfelderzeuger 2 weist eine Poltrennebene 4 auf, die den Nord- von dem Südpol trennt. Der Magnetfelderzeuger 2 weist außerdem eine Stirngerade 5 auf, die stirnseitig auf der Oberfläche des Magnetfelderzeugers 2 und auf der Poltrennebene 4 liegt. Der Magnetfelderzeuger 2 weist außerdem eine Orthogonalebene 6 auf, die orthogonal zur Poltrennlinie 4 ist und in der die Stirngerade 5 liegt. Außerdem weist der Magnetfelderzeuger 2 eine Stirnfläche 7 auf. Die Stirnfläche 7 ist an mindestens einer Stelle in orthogonaler Richtung zur Orthogonalebene 6 erhaben in Bezug auf die Orthogonalebene 6.

Figur 2 weist eine seitliche Ansicht des Magnetfelderzeugers gemäß dem ersten Ausführungsbeispiel auf. Der Magnetfelderzeuger 2 ist an einem stirnseitigen Ende einer Welle 12 angeordnet. Der Nordpol des Magnetfelderzeugers 2 ist durch die Poltrennebene 4 vom Südpol getrennt. Außerdem weist der Magnetfelderzeuger 2 eine Nordpolstirnfläche 18 und eine Südpolstirnfläche 19 auf, die in orthogonaler Richtung zur Orthogonalebene 6 erhaben sind in Bezug auf die Orthogonalebene 6. Außerdem weist der Magnetfelderzeuger 2 einen Spaltwinkel 9 auf, der von zwei Geraden aufgespannt wird. Die Geraden liegen in einer zur Poltrennebene 4 und zur Orthogonalebene 6 orthogonalen Ebene. Sie schneiden die Stirngerade 5. Eine der Geraden geht durch den erhabensten Punkt der Südpolstirnfläche 19, die andere Gerade geht durch den erhabensten Punkt der Nordpolstirnfläche 18. Der Spaltwinkel 9 weist einen Winkelbereich von in etwa 30° bis 170° auf.

Eine weitere Ausführungsform des Magnetfelderzeugers 2 weist eine konvexe Nordpolstirnfläche 18 und eine konvexe Südpolstirnfläche 19 auf (Figur 3).

Eine weitere Ausführungsform des Magnetfelderzeugers 2 weist eine konkave Nordpolstirnfläche 18 und eine konkave Südpolstirnfläche 19 auf (Figur 4).

Der Magnetfelderzeuger 2 kann grundsätzlich auch eine rechteckige Grundfläche (Figur 5) aufweisen oder eine von der zylindrischen oder rechteckigen Form abweichende Form einnehmen, die der zuständige Fachmann für den jeweiligen Zweck als geeignet ansieht.

Der Magnetfelderzeuger 2 im fünften Ausführungsbeispiel (Figur 6) weist teilweise plane Flächen auf der Nordpolstirnfläche 18 und der Südpolstirnfläche 19 auf. Die Stirnfläche 7 ist in Unterflächen aufgeteilt, die von Grenzgeraden 8, 8a und der Stirngeraden 5 begrenzt werden. Die Grenzgeraden 8 und 8a sind parallel zur Stirngeraden 5. Durch diese Formgebung lassen sich speziellere Magnetfelder erzeugen, wodurch der Magnetfelderzeuger 2 besonders klein und kostengünstig sein kann.

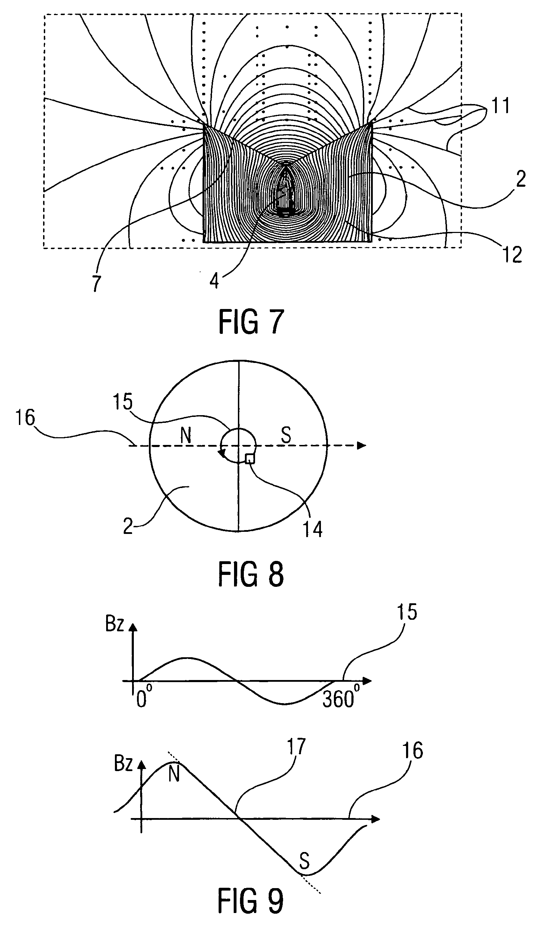

Figur 7 zeigt den Verlauf von magnetischen Feldlinien 11 des Magnetfelderzeugers 2 gemäß der ersten Ausführungsform.

Figur 8 zeigt die Draufsicht des Magnetfelderzeugers 2 gemäß der ersten Ausführungsform. Das Sensorelement 14 ist exemplarisch auf einer kreisförmigen Messtrajektorie 15 abgebildet. Der sich ergebende Flussdichteverlauf ist in Figur 9 exemplarisch abgebildet. Damit der Flussdichteverlauf eine Sinusform aufweist ist es von Vorteil, wenn die magnetische Flussdichte im Verlauf einer Geraden 16, die durch den Mittelpunkt der Messtrajektorie 15 geht und senkrecht zur Stirngerade 5 ist, einen linearen Verlauf im Bereich des Radius der Messtrajektorie 15 aufweist.

Im oberen Diagramm von Figur 9 ist ein exemplarischer Sinusverlauf entlang der Messtrajektorie 15 zu sehen. Bei dem unteren Diagramm ist exemplarisch ein Flussdichteverlauf entlang der Geraden 16 zu sehen.

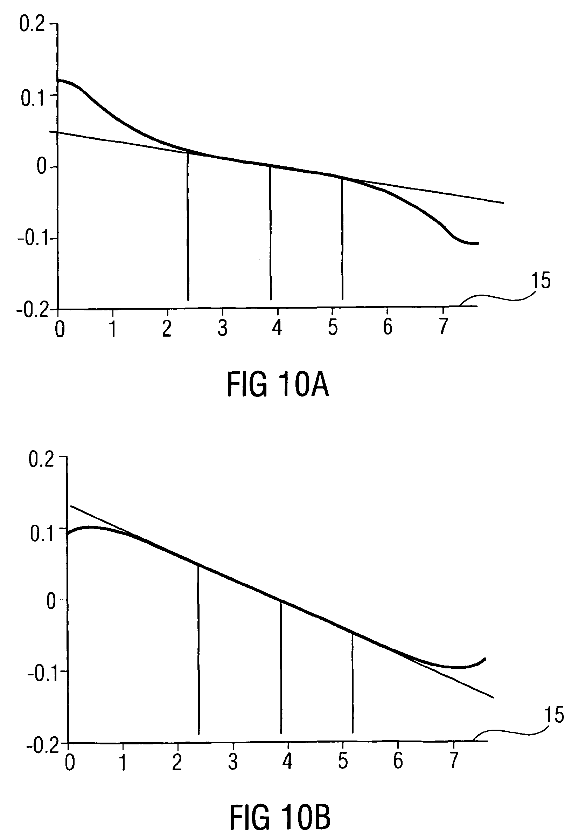

Figur 10 zeigt den Verlauf der magnetischen Flussdichte entlang der Geraden 16 bei einem zylindrischen Magnetfelderzeuger mit planer Stirnfläche (oberes Diagramm), und dem Magnetfelderzeuger 2 gemäß der ersten Ausführungsform (unteres Diagramm). Wie zu sehen ist, ist der lineare Bereich im zweiten Fall größer als im ersten Fall. Außerdem wird der Sinusverlauf entlang der Messtrajektorie 15 im zweiten Fall eine höhere Amplitude aufweisen als im ersten Fall. Dies ist daran erkennbar, dass der Verlauf der magnetischen Flussdichte im zweiten Diagramm steiler ist als im ersten Diagramm.

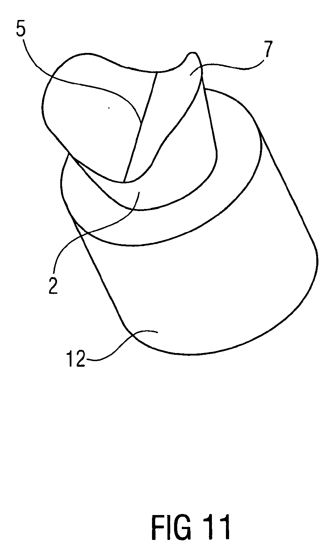

Figur 11 zeigt ein sechstes Ausführungsbeispiel des Magnetfelderzeugers 2.

Es sind auch Ausführungsbeispiele möglich, bei denen nur ein Teil der Nordpolstirnfläche 18 oder der Südpolstirnfläche 18 des Magnetfelderzeugers 2 erhaben ist in orthogonaler Richtung zur Orthogonalebene in dem zuvor erläuterten Sinne.

## Patentansprüche

1. Sensorvorrichtung (1), die mindestens einen Magnetfelderzeuger (2) für den Einsatz beim Ermitteln eines Rotationswinkels mittels mindestens einer Sensoreinheit (13) aufweist und die mindestens eine Sensoreinheit (13), die dazu ausgebildet ist, die magnetische Flussdichte zu erfassen, die repräsentativ ist für den Rotationswinkel um eine Rotationsachse, die in einer Magnetebene (4) des Magnetfelderzeugers (2) liegt und senkrecht zu einer Stirngeraden (5) verläuft, wobei
- der Magnetfelderzeuger (2) als Dipolmagnet mit einem Nord- und einem Südpol ausgebildet ist,
- die Magnetebene (4) des Magnetfelderzeugers (2) in Abwesenheit anderer magnetfeldformender Körper rechtwinklig von allen Magnetfeldlinien durchflossen wird,
- die Stirngerade (5) stirnseitig auf der Oberfläche des Magnetfelderzeugers (2) und auf der Magnetebene (4) liegt,
- der Magnetfelderzeuger (2) eine Orthogonalebene (6) aufweist, die orthogonal zur Magnetebene (4) ist und in der die Stirngerade (5) liegt,
- der Magnetfelderzeuger (2) eine Stirnfläche (7) aufweist, die eine Nordpolstirnfläche (18) und eine Südpolstirnfläche (19) aufweist und die an mindestens einer Stelle in orthogonaler Richtung zur Orthogonalebene (6) erhaben ist in Bezug auf die Orthogonalebene (6), und
- der Magnetfelderzeuger (2) eine Projektionsgerade aufweist, die einen erhabenen Punkt der Stirnfläche (7) auf die Orthogonalebene (6) projiziert, wobei mindestens ein Teil der Projektionsgerade zwischen dem erhabenen Punkt der Stirnfläche (7) und seiner Projektion auf der Orthogonalebene (6) innerhalb des Magnetfelderzeugers (2) liegt, wobei die Sensoreinheit (13) parallel zur Orthogonalebene (6) der Stirnseite des Magnetfelderzeugers (2) zugewandt positioniert ist und relativ zum Magnetfelderzeuger (2) um die Rotationsachse drehbeweglich angeordnet ist.

2. Sensorvorrichtung (1), nach Anspruch 1, wobei der Magnetfelderzeuger (2) bezogen auf die Orthogonalebene (6) eine runde Grundfläche aufweist.

3. Sensorvorrichtung (1), nach Anspruch 1 oder 2, wobei die Nordpolstirnfläche (18) zumindest in einem Teilbereich plan und die Südpolstirnfläche (19) zumindest in einem Teilbereich plan ist.

4. Sensorvorrichtung (1), nach einem der vorstehenden Ansprüche, wobei die Nordpolstirnfläche (18) zumindest in einem Teilbereich konvex und die Südpolstirnfläche (19) zumindest in einem Teilbereich konvex ist.

5. Sensorvorrichtung (1), nach einem der vorstehenden Ansprüche, wobei die Nordpolstirnfläche (18) zumindest in einem Teilbereich konkav und die Südpolstirnfläche (19) zumindest in einem Teilbereich konkav ist.

6. Sensorvorrichtung (1), nach einem der vorstehenden Ansprüche, wobei der Magnetfelderzeuger (2) einen Hartferritmagneten umfasst.

7. Sensorvorrichtung (1), nach einem der vorstehenden Ansprüche, wobei der Magnetfelderzeuger (2) einen kunststoffgebundenen Magnetwerkstoff umfasst.

8. Sensorvorrichtung (1), nach einem der vorstehenden Ansprüche, der einen Spaltwinkel (9) aufweist, der von zwei Geraden aufgespannt wird,
- die in einer zur Magnetebene (4) und zur Orthogonal ebene (6) orthogonalen Ebene liegen,
- die die Stirngerade (5) schneiden, wobei eine der Geraden durch einen erhabensten Punkt der Südpolstirnfläche (19) und die andere Gerade durch einen erhabensten Punkt der Nordpolstirnfläche (18) geht, wobei der Spaltwinkel (9) zwischen 30° und 170° liegt.

## Claims

1. Sensor device (1), which has at least one magnetic field generator (2) for use in determining an angle of rotation by means of at least one sensor unit (13) and the at least one sensor unit (13), which is designed for detecting the magnetic flux density that is representative of the angle of rotation about an axis of rotation, which lies in a magnet plane (4) of the magnetic field generator (2) and runs perpendicularly to an end face line (5),
- the magnetic field generator (2) being designed as a dipole magnet with a north pole and a south pole,
- the magnet plane (4) of the magnetic field generator (2) in the absence of other magnetic-field-forming bodies being flowed through at right angles by all the magnetic field lines,
- the end-face line (5) at the end face lying on the surface of the magnetic field generator (2) and on the magnet plane (4),
- the magnetic field generator (2) having an orthogonal plane (6), which is orthogonal to the magnet plane (4) and in which the end-face line (5) lies,
- the magnetic field generator (2) having an end face (7), which has a north-pole end face (18) and a south-pole end face (19) and which is elevated with respect to the orthogonal plane (6) at at least one point in the orthogonal direction in relation to the orthogonal plane (6), and
- the magnetic field generator (2) having a projection line, which projects an elevated point of the end face (7) onto the orthogonal plane (6), at least part of the projection line between the elevated point of the end face (7) and its projection on the orthogonal plane (6) lying within the magnetic field generator (2), the sensor unit (13) being positioned facing the end face of the magnetic field generator (2), parallel to the orthogonal plane (6), and being arranged movably in relation to the magnetic field generator (2) about the axis of rotation.

2. Sensor device (1) according to Claim 1, the magnetic field generator (2) having a round base area with respect to the orthogonal plane (6).

3. Sensor device (1) according to Claim 1 or 2, the north-pole end face (18) being planar at least in a partial region and the south-pole end face (19) being planar at least in a partial region.

4. The sensor device (1) according to one of the preceding claims, the north-pole end face (18) being convex at least in a partial region and the south-pole end face (19) being convex at least in a partial region.

5. The sensor device (1) according to one of the preceding claims, the north-pole end face (18) being concave at least in a partial region and the south-pole end face (19) being concave at least in a partial region.

6. The sensor device (1) according to one of the preceding claims, the magnetic field generator (2) comprising a hardferrite magnet.

7. The sensor device (1) according to one of the preceding claims, the magnetic field generator (2) comprising a plastic-bonded magnetic material.

8. The sensor device (1) according to one of the preceding claims, which has a gap angle (9), which is defined by two straight lines,
- which lie in a plane orthogonal to the magnet plane (4) and to the orthogonal plane (6),
- which intersect the end-face line (5), one of the lines passing through a most elevated point of the south-pole end face (19) and the other line passing through a most elevated point of the north-pole end face (18), the gap angle (9) lying between 30° and 170°.

## Revendications

1. Dispositif de détection (1), lequel comprend au moins un générateur de champ magnétique (2) pour une utilisation lors de la détermination d'un angle de rotation au moyen d'au moins une unité de détection (13) et l'au moins une unité de détection (13), laquelle est configurée pour détecter la densité de flux magnétique qui est représentative de l'angle de rotation autour d'un axe de rotation qui se trouve dans un plan magnétique (4) du générateur de champ magnétique (2) et s'étend perpendiculairement à une droite frontale (5), dans lequel
- le générateur de champ magnétique (2) est réalisé sous la forme d'un aimant dipolaire avec un pôle Nord et un pôle Sud,
- le plan magnétique (4) du générateur de champ magnétique (2), en l'absence d'autres corps formant un champ magnétique, est traversé à angle droit par toutes les lignes de champ magnétique,
- la droite frontale (5) repose du côté frontal sur la surface du générateur de champ magnétique (2) et sur le plan magnétique (4),
- le générateur de champ magnétique (2) présente un plan orthogonal (6) qui est orthogonal au plan magnétique (4) et se trouve dans la droite frontale (5),
- le générateur de champ magnétique (2) présente une surface frontale (7) qui comprend une surface frontale de pôle Nord (18) et une surface frontale de pôle sud (19) et qui est en relief par rapport au plan orthogonal (6) en au moins un endroit dans la direction orthogonale par rapport au plan orthogonal (6), et
- le générateur de champ magnétique (2) présente une droite de projection qui projette un point en relief de la droite frontale (7) sur le plan orthogonal (6), au moins une partie de la droite de projection se trouvant entre le point en relief de la surface frontale (7) et sa projection sur le plan orthogonal (6) à l'intérieur du générateur de champ magnétique (2), l'unité de détection (13) étant positionnée parallèlement au plan orthogonal (6) en faisant face au côté frontal du générateur de champ magnétique (2) et étant montée rotative autour de l'axe de rotation par rapport au générateur de champ magnétique (2).

2. Dispositif de détection (1) selon la revendication 1, dans lequel le générateur de champ magnétique (2) présente une surface de base ronde en référence au plan orthogonal (6).

3. Dispositif de détection (1) selon la revendication 1 ou 2, dans lequel la surface frontale de pôle Nord (18) est plane au moins dans une zone partielle et la surface frontale de pôle Sud (19) est plane au moins dans une zone partielle.

4. Dispositif de détection (1) selon l'une des revendications précédentes, dans lequel la surface frontale de pôle Nord (18) est convexe au moins dans une zone partielle et la surface frontale de pôle Sud (19) est convexe au moins dans une zone partielle.

5. Dispositif de détection (1) selon l'une des revendications précédentes, dans lequel la surface frontale de pôle Nord (18) est concave au moins dans une zone partielle et la surface frontale de pôle Sud (19) est concave au moins dans une zone partielle.

6. Dispositif de détection (1) selon l'une des revendications précédentes, dans lequel le générateur de champ magnétique (2) comprend un aimant en ferrite dur.

7. Dispositif de détection (1) selon l'une des revendications précédentes, dans lequel le générateur de champ magnétique (2) comprend un matériau magnétique à liant plastique.

8. Dispositif de détection (1) selon l'une des revendications précédentes, lequel présente un angle d'entrefer (9) qui est fixé par deux droites,
- lesquelles se trouvent dans un plan orthogonal au plan magnétique (4) et au plan orthogonal (6),
- lesquelles croisent la droite frontale (5), l'une des droites passant par un point le plus en relief de la surface frontale de pôle Sud (19) et l'autre droite par un point le plus en relief de la surface frontale de pôle Nord (18), l'angle d'entrefer (9) étant compris entre 30° et 170°.
